Europäisches Patentamt

European Patent Office

Office européen des brevets

(19)

(11) Veröffentlichungsnummer: **0 257 207 B1**

(12) **EUROPÄISCHE PATENTSCHRIFT**

(45) Veröffentlichungstag der Patentschrift: 31.07.91

(51) Int. Cl.⁵: **H02B  1/04**, H01H 13/02

(21) Anmeldenummer: **87107448.0**

(22) Anmeldetag: **22.05.87**

(54) **Halter zum Verbinden eines Kopfteils eines Befehls- und/oder Meldegerätes für den Frontplatteneinbau mit dessen Kontakt- und/oder Lampenelement.**

(30) Priorität: **30.06.86 DE 3621881**

(43) Veröffentlichungstag der Anmeldung:
**02.03.88 Patentblatt  88/09**

(45) Bekanntmachung des Hinweises auf die
Patenterteilung:
**31.07.91 Patentblatt  91/31**

(84) Benannte Vertragsstaaten:
**CH DE ES FR GB IT LI**

(56) Entgegenhaltungen:
**EP-A- 0 017 124**
**DE-A- 3 340 659**
**DE-B- 1 665 074**

(73) Patentinhaber: **Elan Schaltelemente GmbH**
**Hauptstrasse 97**
**W-6301 Wettenberg 1(DE)**

(72) Erfinder: **Willems, Jürgen**
**Karlsruher Strasse 58**
**W-4000 Düsseldorf-Eller(DE)**
Erfinder: **Beyer, Detlev**
**Lübisrather Strasse 58**
**W-4040 Neuss 26(DE)**
Erfinder: **Schöning, Ewald**
**Eichenstrasse 100**
**W-4010 Hilden(DE)**

(74) Vertreter: **Sparing - Röhl - Henseler Patentan-**
**wälte**
**Rethelstrasse 123 Postfach 14 02 68**
**W-4000 Düsseldorf 1(DE)**

## Beschreibung

Die Erfindung betrifft einen Halter zum Verbinden eines Kopfteils eines Befehls- und/oder Meldegeräts für den Frontplatteneinbau mit dessen Kontakt-und/oder Lampenelement, mit einer axialen Bohrung zur Aufnahme eines rückwärtigen Endabschnitts des Kopfteils, das mit zwei gegenüberliegenden Rastausnehmungen am Außenumfang versehen ist, und in die Bohrung ragenden, mit den Rastausnehmungen in Eingriff bringbaren, zum Außereingriffbringen von den Rastausnehmungen auslenkbaren, in einer Radialebene des Halters angeordneten Rastelementen.

Bei Frontplatteneinbau-Befehls- und -meldegeräten werden gewöhnlich genormte Rastermaße vorgesehen, entsprechend denen Bohrungen in der Frontplatte, beispielsweise einer Schaltschranktür, angebracht werden, in die Bedienköpfe zur Betätigung von der Frontseite her eingesteckt, rückseitig gesichert und mit einem Kontakt- und/oder Lampenelement des entsprechenden Gerätes verbunden werden. Die Befestigung der Elemente von der Rückseite der Frontplatte her ist schwierig, wenn nicht unmöglich aufgrund der vorhandenen beengten Platzverhältnisse, die sich aufgrund des vorgesehenen Rastermaßes ergeben, das man versucht, optimal zu nutzen. Dementsprechend können die Elemente auch nicht ohne großen Aufwand wieder gelöst werden, zumal eine form- und kraftschlüssige Verbindung zwischen dem Bedienkopf und dem Element unumgänglich ist, wenn beispielsweise Notfunktionen oder andere zwangsläufige Befehlsgaben erfolgen müssen, wie es beispielsweise im Maschinen- oder Anlagenbau zwingend vorgeschrieben ist.

Ein Halter der eingangs genannten Art ist aus der EP-A-0 017 124 bekannt, bei dem eine U-förmige Feder als Rastelement vorgesehen ist, die um den Halter herumgelegt und mittels eines Werkzeugs, der sich in einem Widerlager abstützen kann, bezüglich des Kopfteils außer Eingriff bringbar ist. Hierbei ist die U-förmige Feder nicht gegen Abspringen und Verlieren gesichert und eine Entriegelung nur mit genau passendem Werkzeug möglich, da hiermit die Federschenkel auseinander gedrückt werden müssen.

Aufgabe der Erfindung ist es daher, einen Halter der eingangs genannten Art zu schaffen, der ein sicheres Verbinden des Kontakt- und/oder Lampenelements mit dem Kopfteil des Gerätes ebenso wie ein Lösen hiervon von der Rückseite der Frontplatte her ermöglicht.

Diese Aufgabe wird dadurch gelöst, daß die Rastelemente in Ausnehmungen angeordnet an einem Ende fest eingespannt sind und mit dem anderen Ende in eine Zwangsführung eines zugehörigen, axial verstellbaren Riegels ragen.

Weitere Ausgestaltung der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

Fig. 1    zeigt ein Befehlsgerät im Frontplatteneinbau im Schnitt.

Fig. 2    zeigt einen Halter in Seitenansicht.

Fig. 3    zeigt den Halter von Fig. 2 von hinten.

Fig. 4    zeigt eine Stirnansicht des Hinterteils des Halters von Fig. 2.

Fig. 5    zeigt einen Schnitt durch den Halter von Fig. 2 entsprechend der Linie V-V von Fig. 4.

Fig. 6    zeigt einen Schnitt durch den Halter von Fig. 2 entsprechend der Linie VI-VI von Fig. 4.

Fig. 7    zeigt eine rückseitige Ansicht eines Vorderteils des Halters von Fig. 2.

Fig. 8    zeigt einen Schnitt längs der Linie VIII-VIII von Fig. 7.

Fig. 9    zeigt die Einzelheit IX von Fig. 8 vergrößert.

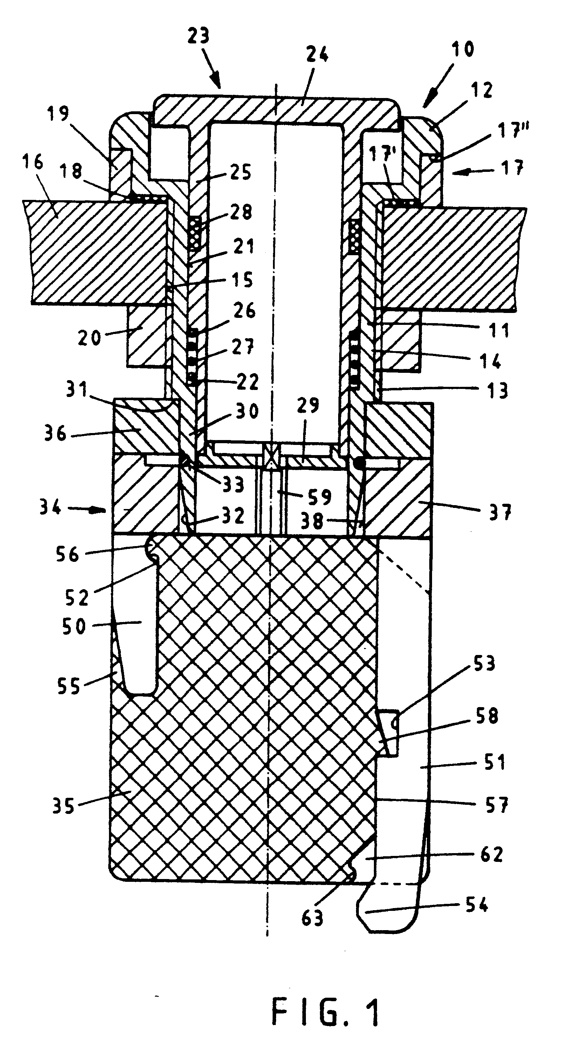

Das in Fig. 1 dargestellte Befehlsgerät umfaßt ein Kopfteil 10 mit einer Hülse 11, die einen frontseitigen Kragen 12 und einen mit Außengewinde 13 versehenen Abschnitt 14 mit vermindertem Durchmesser aufweist, der von einer Bohrung 15 einer Frontplatte 16 aufgenommen wird. Die Hülse 11 besitzt eine gestufte Schulter 17 zwischen dem Kragen 12 und dem Abschnitt 14 mit einem inneren Abschnitt 17', der sich über eine Frontplattendichtung 18 auf der Frontplatte 16 abstützt, und einem äußeren umlaufenden Abschnitt 17", der sich über einen Frontring 19 frontseitig auf der Frontplatte 16 abstützt, wobei der Frontring 19 die Frontplattendichtung 18 nach außen abdeckt und bündig zu dem Kragen 12 angeordnet ist. Die Hülse 11 wird rückseitig von der Frontplatte 16 durch eine Kontermutter 20 gesichert.

Das Kopfteil 10 ermöglicht auch eine gegenüber der dargestellten vorstehenden Frontplatteneinbauweise versenkte Frontplatteneinbauweise, indem eine Bohrung 15 mit einem Durchmesser entsprechend dem Außendurchmesser des Abschnitts 17' zusammen mit einem Druckring zwischen Kontermutter 20 und Frontplatte 16, jedoch ohne Frontring 19 und Frontplattendichtung 18 verwendet wird.

Die Bohrung 21 der Hülse 11 besitzt eine Schulter 22 benachbart zum rückwärtigen Ende und nimmt eine Taste 23 auf, die aus einem Kappenteil 24 und einem rohrförmigen Abschnitt 25 besteht. Der rohrförmige Abschnitt 25 besitzt eine umlaufende Schulter 26, die der inneren umlaufenden Schulter 22 der Hülse 11 gegenüberliegt und zwischen denen eine Druckfeder 27 angeordnet ist.

Außerdem ist am Außenumfang des rohrförmigen Abschnitts 25 eine Nut zur Aufnahme einer Schleifdichtung 28 vorgesehen, die mit der Innenwandung der Bohrung 21 der Hülse 11 in Dichteingriff steht. Die rückwärtige Seite der Taste 23 ist durch einen Deckel 29 verschlossen.

An den mit Außengewinde versehenen Abschnitt 14 der Hülse 11 des Kopfteils 10 schließt sich rückseitig ein rohrförmiger Abschnitt 30 mit vermindertem Durchmesser an, so daß zwischen dem Abschnitt 30 und dem Abschnitt 14 eine umlaufende Schulter 31 ausgebildet ist. Der Abschnitt 30 ist an seinem freien Ende mit einer umlaufenden Abschrägung 32 versehen, benachbart zu der zwei gegenüberliegende Nuten 33 am Außenumfang des Abschnitts 30 angeordnet sind. Die Nuten 33 sind geradlinig, parallel zueinander und verlaufen parallel zur Tangente an den Umfang des Abschnitts 30.

Mit dem Kopfteil 10 steht ein Halter 34 für ein Kontakt- und/oder Lampenelement 35 form- und kraftschlüssig in Eingriff. Der Halter 34 besteht aus einem Vorderteil 36 und einem Hinterteil 37, die miteinander verbunden sind, während das Hinterteil 37 das Kontakt- und/oder Lampenelement 35 hält. Der Halter 34 besitzt eine axiale Bohrung 38 zur Aufnahme des rohrförmigen Abschnitts 30 der Hülse 11 des Kopfteils 10. Die Länge des Abschnitts 30 entspricht der Tiefe der Bohrung 38, so daß beim Aufschieben des Halters 34 auf das Kopfteil 10 die Vorderseite des Vorderteils 36 gegen die Schulter 31 stößt und der Abschnitt 30 von der Bohrung 38 des Halters 34 aufgenommen wird.

Das Hinterteil 37 des Halters 34 besitzt frontseitig zwei parallele nutförmige Ausnehmungen 39 benachbart zu der Bohrung 38, die entsprechend der Tiefe der Nuten 33 die Bohrung 38 schneiden. Die Ausnehmungen 39 münden an einem Ende jeweils in einer axialen Ausnehmung 40, die sich auch in dem Vorderteil 36 fortsetzt. An dem der axialen Ausnehmung 40 gegenüberliegenden Ende der sich in einer Radialebene des Halters 34 erstreckenden Ausnehmung 39 ragt von der Außenseite des Halters 34 ein Vorsprung 41 in die Ausnehmung 39, letztere verengend, hinein. Die beiden Ausnehmungen 39 nehmen jeweils einen Federdraht 42 auf, der an einem Ende abgewinkelt ist, so daß er in der Ausnehmung 39 an einem Ende durch den Vorsprung 41 gehalten wird, während er sich mit dem anderen freien Ende bis in einen Riegel 43 erstreckt, der von der axialen Ausnehmung 40 aufgenommen wird.

Der Riegel 43 besitzt eine Zwangsführung 44 für den Federdraht 42 mit jeweils einem Rastvorsprung 45 am Ende der Zwangsführung 44 zur Ausbildung von zwei Rastsitzen für den Federdraht 42, wobei die Zwangsführung 44 einen schräg verlaufenden Abschnitt 44' aufweist, der zur benachbarten Außenseite des Halters 34 in rückwärtiger Richtung verlaufend gerichtet ist. Der Riegel 43 nimmt im wesentlichen die gesamte Ausnehmung 40 in Vorder- und Hinterteil 36, 37 ein.

Die Ausnehmungen 39 werden frontseitig durch die Rückseite des Vorderteils 36 verschlossen, wobei das Vorderteil 36 rückseitig zwei Rippen 46 aufweist, die endseitig mit einer scharfen Kante 47 (einem sogenannten Energierichtungsgeber) versehen sind. Das Hinterteil 37 besitzt Nuten 48, die parallel zu den Ausnehmungen 39 verlaufen und in die die Rippen 46 eingedrückt und ultraschallverschweißt werden, um das Vorderteil 36 mit dem Hinterteil 37 zu verbinden. Auf diese Weise werden die Federdrähte 42 in der Radialebene der Ausnehmungen 39 fixiert.

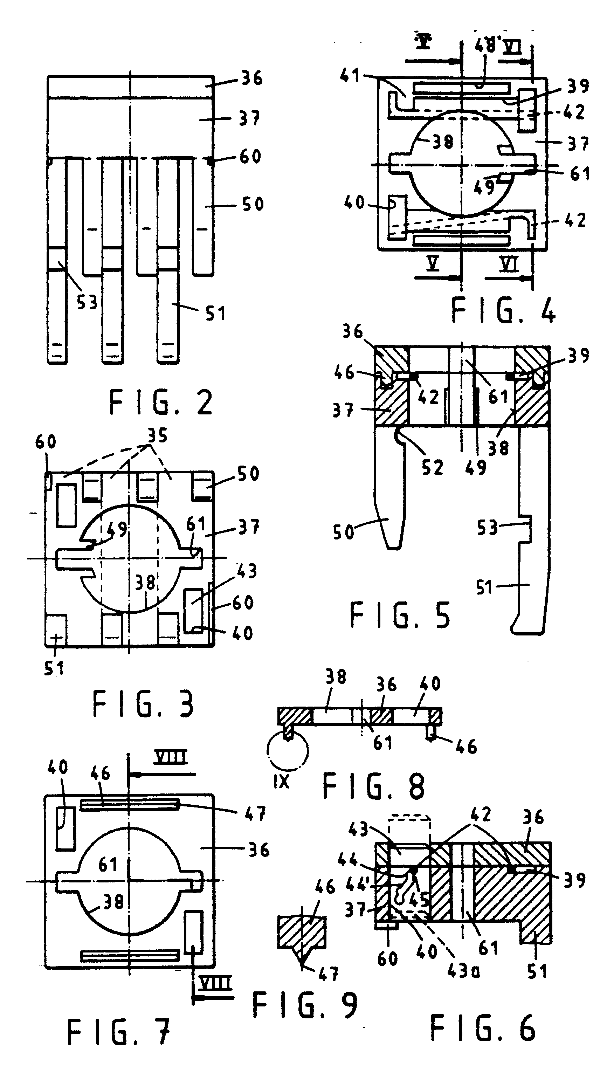

Die Normalstellung der Federdrähte 42 ist in Fig. 4, obere Hälfte gestrichelt eingezeichnet, dieser Stellung werden die Halter 34 werksseitig montiert und geliefert. Wenn der Halter 34 von der Rückseite her auf den Abschnitt 30 des Kopfteils 10 geschoben wird, gleiten die Federdrähte 42 an der Abschrägung 32 des Abschnitts 30 entlang, werden aus der Bohrung 38 heraus in die Ausnehmungen 39, die zu diesem Zweck eine entsprechende Breite haben, ausgelenkt und rasten dann in die Nuten 33 ein, wobei sie wiederum die in Fig. 4, obere Hälfte dargestellte Position einnehmen. Hierdurch sitzen die Federdrähte 42 genau und werden zudem durch die entsprechende Rastung 45 der Riegel 43 gehalten. Durch diese form- und kraftschlüssige Verbindung ist es möglich, große axiale Kräfte aufzunehmen.

Zum Lösen der Rastung werden die Riegel 43 mit Hilfe eines einfachen, handelsüblichen Werkzeugs, etwa eines Schraubendrehers, axial innerhalb der Ausnehmung 40 in Richtung auf das Kopfteil 10 durch Angriff von der Rückseite her verschoben, wodurch der jeweilige Federdraht 42 infolge seiner Festlegung in der Radialebene entlang der Zwangsführung 44 in die zweite äußere Rastposition geführt wird, so daß der Federdraht 42 die in Fig. 4, untere Hälfte gestrichelt dargestellte Position einnimmt, in der er die Bohrung 38 allenfalls nur noch tangiert, so daß die Rastung bezüglich des Kopfteils 10 aufgehoben ist. Hierdurch kann der Halter 34 einfach nach hinten abgezogen werden. Zur erneuten Montage müssen die Federdrähte 42 lediglich wieder gespannt werden, d.h., die Riegel 43 werden wieder in ihren ursprünglichen Zustand in den Ausnehmungen 40 eingedrückt. Der Riegel 43 kann rückseitig eine längliche Einbuchtung 43a zum Ansetzen eines Werkzeugs aufweisen.

Die Federdrähte 42 können runden Querschnitt aufweisen, sie können jedoch auch einen anderen, beispielsweise quadratischen Querschnitt besitzen. Die Riegel 43 sind bei sich diagonal gegenüberliegender Anordnung identisch, jedoch ist es hierbei zweckmäßig eine Markierung vorzusehen, um die Riegel 43 seitenrichtig in die Ausnehmungen 40 einzuführen.

Damit die Federdrähte 42 zuverlässig in die zugehörigen Nuten 33 gelangen, ist eine Verdrehsicherung zwischen dem Kopfteil 10 und dem Halter 34 vorgesehen, die beim dargestellten Ausführungsbeispiel darin besteht, daß in die Bohrung 38 hineinragende Rippen 49 vorgesehen sind, die von entsprechenden Nuten am Abschnitt 30 aufgenommen werden.

Rückseitig besitzt das Hinterteil 37 auf einer Seite kurze und auf der gegenüberliegenden Seite lange auf Lücke angeordnete Rastbeine 50 bzw. 51. Die kurzen Rastbeine 50 weisen innenseitig benachbart zur Rückseite des Hinterteils 37 eine im Schnitt etwa halbkreisförmige Hinterschneidung 52 auf, während die Rastbeine 51 innenseitig etwa mittig eine im Schnitt rechteckige Ausnehmung 53 und ferner am freien Ende einen einwärts gerichteten Fuß 54 besitzen.

Das Kontaktelement 35 besitzt mindestens eine Ausnehmung 55 zur Aufnahme eines Rastbeins 50 mit einem entsprechenden Vorsprung 56 zum Eingriff mit der Hinterschneidung 52. Ferner besitzt das Kontaktelement 35 an der zur Ausnehmung 55 gegenüberliegenden Seite mindestens eine dem Rastbein 51 entsprechende Ausnehmung 57 mit einem hakenförmigen Vorsprung 58 zum Einrasten in die Ausnehmung 53. Das Kontaktelement 35 wird entsprechend zwischen die Rastbeine 50, 51 unter Ausnutzung von deren Federeigenschaften eingerastet und dort sicher gehalten.

Benachbart zu dem Fuß 54 besitzt das Kontaktelement 35 eine Ausnehmung 62 mit einem hakenförmigen Vorsprung 63, so daß ein einfaches, handelsübliches Werkzeug, z.B. ein Schraubendreher, an dem Vorsprung 63 angreifend und sich an dem Fuß 54 des Rastbeines 51 abstützend dazu verwendet werden kann, das Kontaktelement 35 von dem Halter 34 zu lösen, indem mit dem Werkzeug eine Hebel- und Schwenkbewegung ausgeführt wird.

Das Kontaktelement 35 besitzt einen unter Federdruck stehenden frontseitigen Betätigungsstößel 59, der sich bis etwa zum Deckel 29 erstreckt. Durch Betätigen der Taste 23 gegen die Kraft der Feder 27 wird der Stößel 59 des Bedienelementes 35 betätigt.

Bei der dargestellten Ausführungsform können maximal drei Kontaktelemente 35 an dem Halter 34 befestigt werden, wobei jedes Kontaktelement 35 von einem Rastbein 50 und einem Rastbein 51 gehalten wird. Für die beiden äußeren Kontaktelemente 35 können zusätzlich seitliche Haltestege 60 vorgesehen sein. Wenn mehrere Kontaktelemente 35 an dem Halter 34 befestigt sind, die mehrere Stößel 59 aufweisen, müssen auch die äußeren Stößel 59 betätigt werden können. Zu diesem Zweck ist die Axialbohrung 38 gegenüberliegend mit entsprechend dimensionierten Nuten 61 versehen, die sich parallel zu den Ausnehmungen 39, 48 erstrecken und die äußeren Stößel 59 aufnehmen, so daß diese ebenfalls durch den Taster 23 betätigbar sind.

## Patentansprüche

1. Halter zum Verbinden eines Kopfteils (10) eines Befehls- und/oder Meldegeräts für den Frontplatteneinbau mit dessen Kontakt- und/oder Lampenelement (35), mit einer axialen Bohrung (38) zur Aufnahme eines rückwärtigen Endabschnitts (30) des Kopfteils (10), das mit zwei gegenüberliegenden Rastausnehmungen (33) am Außenumfang versehen ist, und in die Bohrung (38) ragenden, mit den Rastausnehmungen (33) in Eingriff bringbaren, zum Außereingriffbringen von den Rastausnehmungen (33) auslenkbaren, in einer Radialebene des Halters (34) angeordneten Rastelementen (42), dadurch **gekennzeichnet**, daß die Rastelemente (42) in Ausnehmungen (39) angeordnet an einem Ende fest eingespannt sind und mit dem anderen Ende in eine Zwangsführung (44) eines zugehörigen, axial verstellbaren Riegels (43) ragen.

2. Halter nach Anspruch Anspruch 1, dadurch gekennzeichnet, daß die Rastelemente Federdrähte (42) sind.

3. Halter nach Anspruch 1 oder 2, dadurch gekennzeichnet, daß die Zwangsführung (44) zum Auslenken des Rastelements (42) in der Radialebene an beiden Enden jeweils mit einem Rastsitz (45) für das Rastelement (42) versehen ist.

4. Halter nach einem der Ansprüche 1 bis 3, dadurch gekennzeichnet, daß eine Verdrehsicherung (49) für das Kopfteil (10) im Bereich der axialen Bohrung (38) vorgesehen ist.

5. Halter nach einem der Ansprüche 1 bis 4, dadurch gekennzeichnet, daß er aus einem Vorder- und einem Hinterteil (36, 37) besteht, wobei die Ausnehmungen (39) in einem dieser beiden Teile ausgebildet und durch das andere Teil verschlossen sind.

6. Halter nach einem der Ansprüche 1 bis 5, dadurch gekennzeichnet, daß der Riegel (43) rückseitig eine längliche Einbuchtung (43a) aufweist.

7.  Halter nach einem der Ansprüche 1 bis 6, dadurch gekennzeichnet, daß er rückseitig Rastbeine (50, 51) für das Kontakt- und/oder Lampenelement (35) aufweist.

8.  Halter nach Anspruch 7, dadurch gekennzeichnet, daß auf einer Seite kürzere Rastbeine (50) und auf der anderen Seite längere Rastbeine (51) vorgesehen sind, wobei die Rastbeine (50, 51) gegeneinander versetzt angeordnet sind.

9.  Halter nach Anspruch 7 oder 8, dadurch gekennzeichnet, daß mindestens ein Rastbein (50) mit einer innenseitigen im Schnitt kreissegmentförmigen Ausnehmung (52) zur Ausbildung einer Drehachse für das Kontakt- und/oder Lampenelement (35) während der Montage bzw. Demontage versehen ist.

10.  Halter nach Anspruch 8 oder 9, dadurch gekennzeichnet, daß die längeren Rastbeine (51) etwa mittig mit einer nach innen gerichteten Rastnut (53) zur Aufnahme einer Rastnase (58) des Kontakt- und/oder Lampenelements (35) versehen ist.

11.  Halter nach einem der Ansprüche 8 bis 10, dadurch gekennzeichnet, daß die längeren Rastbeine (51) endseitig mit einem einwärts gerichteten Fuß (54) versehen sind.

12.  Halter nach einem der Ansprüche 1 bis 11, dadurch gekennzeichnet, daß rückseitig benachbart zu den Riegeln (43) seitliche Haltestege (60) für Kontakt- und/oder Lampenelemente (35) vorgesehen sind.

13.  Halter nach einem der Ansprüche 1 bis 12, dadurch gekennzeichnet, daß die radiale Bohrung (38) an zwei einander gegenüberliegenden Stellen durch in die Bohrung (38) mündende Nuten (61) verbreitert ist.

14.  Halter nach einem der Ansprüche 1 bis 13, dadurch gekennzeichnet, daß die Rastelemente (42) über eine Abschrägung (32) am rückwärtigen Ende des Kopfteils (10) aus dem Bereich der Bohrung (38) in die Ausnehmungen (39) federnd eindrückbar sind.

## Claims

1.  Support for connecting the cap (10) of a front mounted panel control and/or signal device having a contact and/or a lamp element (35), with an axial boring (38) to accommodate a rear end section (30) of the cap (10), which is provided, on its outer periphery, with two mutually opposed detent recesses (33), and with detent elements (42) which extend into the boring (38) and which can be caused to engage with the detent recesses (33) and which can be deflected in order to disengage them from the detent recesses (33) and which are positioned in a radial plane of the support (34), characterised by the fact that the detent elements (42) are firmly clamped at one end into recesses (39) and extend at the other end into a restricted guide (44) of an associated axially adjustable bolt (43).

2.  Support in accordance with Claim 1, characterised by the fact that the detent elements consist of spring wires (42).

3.  Support in accordance with Claim 1 or 2, characterised by the fact that the restricted guide (44), for the deflection of the detent element (42) in the radial plane, is provided at each end with a detent seating (45) for the detent element (42).

4.  Support in accordance with one of Claims 1 to 3, characterised by the fact that an anti-torsion device (49) for the cap (10) is provided in the zone of the axial boring (38).

5.  Support in accordance with one of Claims 1 to 4, characterised by the fact that it comprises a front part and a rear part (36,37) the recesses (39) being formed in one of these two parts and closed by the other part.

6.  Support in accordance with one of Claims 1 to 5, characterised by the fact that the bolt (43) is provided at the rear with an elongated indentation (43a).

7.  Support in accordance with one of Claims 1 to 6, characterised by the fact that it is provided at the rear with support legs (50,51) for the contact and/or lamp element (35).

8.  Support in accordance with Claim 7, characterised by the fact that shorter support legs (50) are provided on one side while longer support legs (51) are provided on the other side, the support legs (50,51) being offset in relation to each other.

9.  Support in accordance with Claim 7 or 8, characterised by the fact that at least one support leg (50) is provided with an internal recess (52) of segmental cross section, serving to form a fulcrum for the contact and/or lamp element (35) during assembly or removal.

**10.** Support in accordance with Claim 8 or 9, characterised by the fact that the longer support legs (51) are provided approximately halfway up with a detent groove (53) serving to receive detent lug (58) of the contact and/or lamp element (35).

**11.** Support in accordance with one of Claims 8 to 10, characterised by the fact that the longer support legs (51) are provided at the end with a foot (54) turned inwards.

**12.** Support in accordance with one of Claims 1 to 11, characterised by the fact that lateral holding bars (60) for contact and/or lamp elements (35) are provided close to the rear of the bolts (43).

**13.** Support in accordance with one of Claims 1 to 12, characterised by the fact that the radial boring (38) is widened in two mutually opposite places by means of grooves (61) leading into the boring (38).

**14.** Support in accordance with one of Claims 1 to 13, characterised by the fact that the detent elements (42), by means of a bevelling (32) at the rear end of the cap (10), can be resiliently pressed out of the zone of the boring (38) into the recesses (39).

**Revendications**

**1.** Support pour relier une partie de tête (10) d'un appareil de transmission d'ordre et/ou d'alarme, pour le montage en panneau avant, avec son élément de contact et/ou à lampe (35), avec un perçage axial (38), pour recevoir la partie d'extrémité arrière (30) de la partie de tête (10), qui est pourvue à la périphérie extérieure de deux évidements d'encliquetage opposés (33), et des éléments d'encliquetage (42) disposés dans un plan radial du support (34), pénétrant dans le perçage (38), pouvant venir en contact avec les évidements d'encliquetage (33), dégageables de ces derniers pour rompre le contact, caractérisé en ce que les éléments d'encliquetage (42) sont disposés dans des évidements (39), fermement serrés à une extrémité, et pénètrent avec l'autre extrémité dans un guidage forcé (44) d'un verrou réglable (43) axialement correspondant.

**2.** Support selon la revendication 1, caractérisé en ce que les éléments d'encliquetage sont des fils de ressort (42).

**3.** Support selon la revendication 1 ou 2, caractérisé en ce que le guidage forcé (44) est pourvu à chacune des deux extrémités d'un siège d'encliquetage (45) pour l'élément d'encliquetage (42), pour dévier l'élément d'encliquetage (42) dans le plan radial.

**4.** Support selon l'une des revendications 1 à 3, caractérisé en ce qu'une sécurité de rotation (49) pour la partie de tête (10) est prévue dans la zone du perçage axial (38).

**5.** Support selon l'une des revendications 1 à 4, caractérisé en ce qu'il se compose d'une partie avant et d'une partie arrière (36,37), les évidements (39) étant réalisés dans l'une de ces deux parties et obturés par l'autre partie.

**6.** Support selon l'une des revendications 1 à 5, caractérisé en ce que le verrou (43) présente à l'arrière une dentelure allongée (53a).

**7.** Support selon l'une des revendications 1 à 6, caractérisé en ce qu'il présente à l'arrière des pattes d'encliquetage (50,51) pour l'élément de contact et/ou à lampe (35).

**8.** Support selon la revendication 7, caractérisé en ce que des pattes d'encliquetage courtes (50) sont prévues sur une face et des pattes d'encliquetage longues (51) sur l'autre face, les pattes d'encliquetage (50,51) étant décalées les unes par rapport aux autres.

**9.** Support selon la revendication 7 ou 8, caractérisé en ce qu'au moins une patte d'encliquetage (50) est pourvue d'un évidement interne à section segment de cercle (52) en vue de réaliser un axe de rotation pour l'élément de contact et/ou à lampe (35), pendant le montage ou le démontage.

**10.** Support selon la revendication 8 ou 9, caractérisé en ce que les pattes d'encliquetage longues (51) sont pourvues à peu près au centre d'une gorge d'encliquetage (53) tournée vers l'intérieur, pour recevoir un ergot d'encliquetage (58) de l'élément de contact et/ou à lampe (35).

**11.** Support selon l'une des revendications 8 à 10, caractérisé en ce que les pattes d'encliquetage longues (51) sont pourvues d'un côté d'un pied tourné vers l'intérieur (54).

**12.** Support selon l'une des revendications 1 à 11, caractérisé en ce que des nervures de maintien latérales (60) sont prévues à l'arrière, au voisinage des verrous (43), pour les éléments de contact et/ou à lampe (35).

13. Support selon l'une des revendications 1 à 12, caractérisé en ce que le perçage radial (38) est élargi, en deux emplacements opposés l'un à l'autre, par des gorges (61) qui débouchent dans le perçage (38).

14. Support selon l'une des revendications 1 à 13, caractérisé en ce que les éléments d'encliquetage (42) peuvent être pressés élastiquement en partant de la zone du perçage (38) dans les évidements (39), par un chanfrein (32) situé sur l'extrémité arrière de la partie de tête (10).

FIG. 1

FIG. 2

FIG. 3

FIG. 4

FIG. 5

FIG. 7

FIG. 8

FIG. 9

FIG. 6